# EUROPÄISCHE PATENTSCHRIFT

(11) **EP 3 613 281 B1**
(45) Veröffentlichungstag und Bekanntmachung des Hinweises auf die Patenterteilung: **26.07.2023**
(21) Anmeldenummer: 19191639.4
(22) Anmeldetag: 14.08.2019
(51) Int. Cl.: A01J 25/12, A01J 25/15

(54) **VORRICHTUNG ZUR KÄSEHERSTELLUNG**
APPARATUS FOR CHEESE PRODUCTION
APPAREIL POUR LA PRODUCTION DE FROMAGE

(30) Priorität: 20.08.2018 CH 10072018
(43) Veröffentlichungstag der Anmeldung: 26.02.2020
(73) Patentinhaber: Kalt Maschinenbau AG, 9604 Lütisburg (CH)
(72) Erfinder: Grüninger, Siegfried, 9011 St. Gallen (CH)
(74) Vertreter: Frommhold, Joachim

(56) Entgegenhaltungen:
- EP-A1- 0 350 777
- EP-A1- 0 406 899
- US-A- 829 609
- US-A- 3 114 392
- US-A- 3 249 121

## Beschreibung

Die Erfindung betrifft eine Vorrichtung zur Käseherstellung, insbesondere eine Kassettenpresse sowie eine Gelenkrohranordnung zur Zuführung von Käserohmasse aus einem Käsefertiger in Formen der Kassettenpresse.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismusses für die Formen. Der Verteilkopf muss dabei manuell bereitgestellt resp. gewechselt werden. Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen. Die Kassetten haben eine spaltminimierende Randausbildung und zum schieben der Kassetten ist eine mechanisierte Einrichtung vorgesehen.

Die Käserohmasse gelangt über ein Zuführrohr, dessen Enden am Kessel eines Käsefertigers bzw. am Verteilkopf angeschlossen sind, in den Verteilkopf und von da in die runden oder eckigen Formen, die in der Wanne der Kassettenpresse angeordnet sind. Das Rohr muss so ausgebildet sein, dass es die Bewegung des Portalwagens beim Befüllen der Formen mitgehen kann. Die Genauigkeit des Befüllens der einzelnen Formen kann jedoch in unerwünschtem Mass schwanken.

Der Erfindung liegt daher die Aufgabe zugrunde, die Nachteile des Standes der Technik zu minimieren und die Genauigkeit beim Befüllen der Formen mit Käserohmasse zu erhöhen und eine möglichst gleichmässige, konstante Befüllung zu erreichen.

Die Aufgabe ist mit den Merkmalen des Patentanspruchs 1 gelöst.

Erfindungsgemäss weist eine Vorrichtung zur Käseherstellung, insbesondere eine Kassettenpresse, mit runden oder eckigen Käseformen, zum flüssigkeitsverringernden Pressen von Käserohmasse eine in der Draufsicht offene Wanne, einen Presskopf mit einer Vielzahl, auf die Käseformen ausgerichteten Pressstempel zum Pressen der Käserohmasse und einen Verteilkopf zum Einschwemmen der Käserohmasse auf. Der Verteilkopf ist entlang der Längsseiten der Wanne verfahrbar angeordnet.

Weiterhin ist am Verteilkopf eine Gelenkrohranordnung zum Zuführen der Käserohmasse von einem Käsefertiger drehbeweglich gekoppelt.

Bevorzugte Ausführungsformen sind in den abhängigen Ansprüchen offenbart.

Vorteilhaft umfasst die Gelenkrohranordnung ein Doppelgelenk aus zwei winklig zueinander angeordneten und drehgelenkig miteinander verbundenen, rohrförmigen Gelenkstücken, wobei das Doppelgelenk resp. eines der Gelenkstücke mittels einer Gelenkverbindung mit dem Verteilkopf gekoppelt ist.

An das Doppelgelenk schliesst ein etwa senkrecht zur Ebene der Wanne stehendes Rohr drehgelenkig an, welches auch als Vorratsbehälter für Käserohmasse dient.

Bevorzugt schliesst an das vertikal stehende Rohr ein horizontal gelagertes Rohr an, das wiederum drehgelenkig mit einem weiteren, horizontal gelagerten Rohr verbunden ist, wobei die Rohre an einer Anhängevorrichtung angehangen sind.

Die Erfindung betrifft weiterhin eine Gelenkrohranordnung zur Zuführung von Käserohmasse von einem Käsefertiger zu einer Einrichtung zum flüssigkeitsverringernden Pressen der Käserohmasse, insbesondere eine Kassettenpresse.

Die erfindungsgemässe Gelenkrohranordnung ermöglicht eine genaue Verteilung der Käserohmasse, insbesondere eine gleiche Verteilung von Käsebruch auf die einzelnen Formen, so dass das Gewicht der weichen Käse nach dem Abpressen der Molke etwa gleich ist. Es hat sich in Versuchen gezeigt, dass bei vorbekannten Lösungen sich laufend ändernde vertikale Neigungswinkel von Gelenkrohren einen hohen Einfluss auf die Verteilgenauigkeit des Käsebruchs haben.

Die Erfindung wird nachfolgend in einem Ausführungsbeispiel anhand einer Zeichnung näher beschrieben. In der Zeichnung zeigt die einzige Figur eine Kassettenpresse mit einer erfindungsgemässen Gelenkrohranordnung.

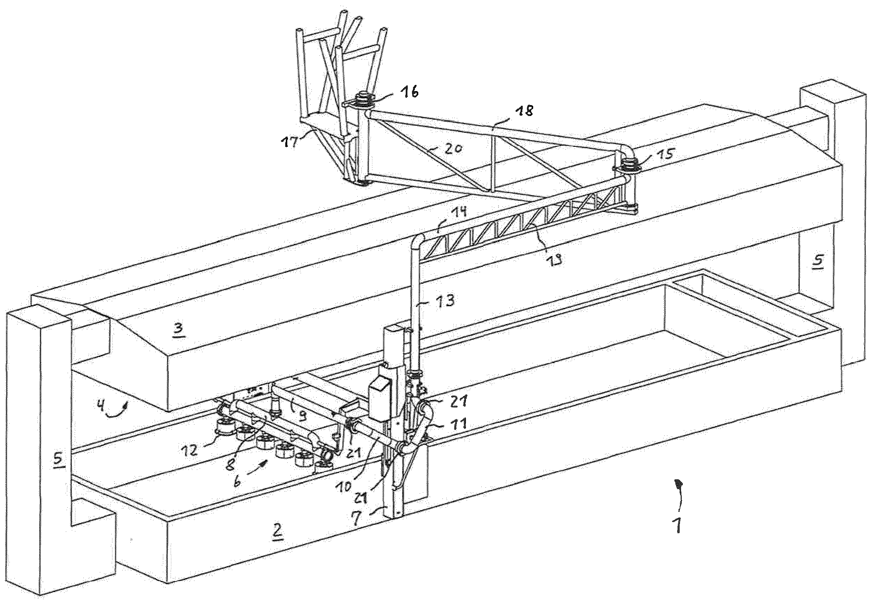

Eine Kassettenpresse 1 (Fig. 1) umfasst im vorgestellten Beispiel zumindest
- eine in der Draufsicht rechteckige und oben offene Wanne 2 der Kassettenpresse 1 mit in der Draufsicht rechteckigen, oben offenen Kassetten (nicht dargestellt), die in Reihen quer zur Längsrichtung der Wanne 2 nebeneinander angeordnet sind, wobei die Kassetten im oberen Bereich ihrer Längsseiten eine bei Kontakt spaltminimierende Randausbildung aufweisen und eventuelle, in Längsrichtung der Wanne 2 verlaufende Längsspalte zwischen Kassetten und Längsseiten der Wanne 2 im wesentlichen abgedeckt sind,
- in den Kassetten anordenbare Formen (nicht dargestellt) zur Aufnahme der zu pressenden Käserohmasse, wobei eine Teil der Kassette sein kann und im Beispiel jeweils aus einem inneren, gelochten Mantel und einer äusseren Hülle mit mindestens einem Auslass für die abzupressende Flüssigkeit besteht, und wobei eine Kassette mindestens eine Form umfasst, bevorzugt sechs bis achtzehnFormen;
- auf den oberen Rändern, die die Aussenseiten des Kassettenblocks in der Wanne 2 in Längs- und Querrichtung bilden, sind Randbleche (Höhe von einigen Zentimetern) angeordnet, bevorzugt geschweisst, um ein einschwemmen der Käserohmasse bis oberhalb der Kassettenoberkante zu ermöglichen
- einen, auf Endsäulen 5 angeordneten Presskopf 4 mit einer Vielzahl, auf die Formen ausgerichteten Pressstempel zum Pressen der Käserohmasse, z. B. entsprechend der Offenbarung der EP-B-543899 ausgebildet, sowie ggf. Niederhalter zum abdrücken des Presskopfes 4 von den Kassetten;
- einen Abfüllapparat zum Einschwemmen der Käserohmasse, der an einem Portalwagen 7 angeordnet ist, der motorisch betrieben entlang der Längsseiten der Wanne 2 verfahrbar ist;
- eine Handhabungseinrichtung zum anheben, verfahren zu und ablegen einer Kassette auf einer Fördereinrichtung (nicht dargestellt) ausserhalb der Wanne 2;
- eine Einrichtung zum drehen/wenden (nicht dargestellt) der Kassetten bzw. einer Kassettenreihe um deren Längsachse;
- eine vertikal verfahrbare Ausblaseinrichtung (nicht dargestellt) mit Ausblasdüsen, wobei jeder Form einer Kassette mindestens eine Ausblasdüse zugeordnet ist, um so die Käselaibe auf die Fördereinrichtung zu entleeren.

Der Abfüllapparat umfasst einen Verteilkopf 6 mit einer Anzahl Dosierköpfe 12, die auf die Anzahl der in einer Reihe in der Wanne 2 anordenbaren Formen abgestimmt ist. Der Verteilkopf 6 umfasst weiterhin ein Verteilrohr 8 und ein Zuführrohr 9 zur Zuführung und Verteilung der Käserohmasse auf die Dosierköpfe 12.

Mittels einer Gelenkverbindung 21 ist das Zuführrohr 9 mit einem Doppelgelenk aus zwei winklig zueinander angeordneten und drehgelenkig miteinander verbunden, rohrförmigen Gelenkstücken 10, 11 verbunden. Das Gelenkstück 10 ist S-förmig und das Gelenkstück 11 ist U-förmig abgewinkelt, wobei die kurzen Anschlussschenkel nicht wesentlich länger als der Durchmesser der Gelenkstücke 10, 11 sind. Das gerade Teilstück der Gelenkstücke 10, 11 weist eine Länge auf, die ein Mehrfaches des Durchmessers beträgt.

Mittels einer weiteren Gelenkverbindung 21 ist eine gelenkige Verbindung zu einem etwa senkrecht zur Ebene der Wanne 2 stehendem Rohr 13 hergestellt, das an einer Anhängevorrichtung 17 angehangen ist.

Das etwa senkrecht angeordnete Rohr 13 dient zugleich als Vorratsbehälter für Käserohmasse und der Verdichtung des Käsebruchs in der Molke der Käserohmasse.

Die Anhängevorrichtung 17 ist an einer Hallendecke oder einem hoch gelegenen Portal befestigt und umfasst zwei miteinander über ein Anbindungsgelenk 15 drehgelenkig verbundene, horizontal angeordnete Fachwerkträger 19, 20. Bestandteil beider Fachwerkträger 19, 20 ist jeweils ein Rohr 14, 18, wobei das Rohr 14 mit dem etwa im rechten Winkel mit dem Rohr 13 verbunden ist (Fig. 1).

Der Fachwerkträger 20, eingeschlossen das Rohr 20, ist mittels eines Drehgelenks 16 drehgelenkig mit dem an der Hallendecke oder Hallenwand befestigten Teil der Anhängevorrichtung 17 verbunden. Das Rohr 18 verfügt über eine nicht dargestellte Anbindung zum Käsefertiger.

Während einer Befüllung der Formen wird der Portalwagen 7 mit dem Verteilkopf 6 entlang der Längsachse der Wanne 2 zwischen den Endsäulen 5 verfahren. Die Gelenkrohranordnung bildet diese Bewegung ohne Totpunkte oder Schiefstellungen nach.

Infolge des Doppelgelenks 10, 11 und der gelenkigen Anbindung der Anhängevorrichtung 17 befindet sich das Rohr 13 immer senkrecht und ist ständig gefüllt. Die Verteilung der Käserohmasse und insbesondere des Käsebruchs auf die Formen erfolgt erfolgt gleichmässig. Es treten keine produktflusshemmenden Winkelabweichungen der Gelenkrohranordnung auf.

Bei der Anordnung von Kassettenpresse 1 und Anhängevorrichtung 17 ist lediglich darauf zu achten, dass das Drehgelenk 16 resp. die Anhängevorrichtung 17 und Anbindungsgelenk 15resp. das Rohr 13 im Beispiel oberhalb der gegenüberliegenden Längsseiten der Kassettenpresse 1 befindlich sind, um ausreichende Bewegungen der Gelenkrohranordnung zu ermöglichen.

Die erfindungsgemässe Gelenkrohranordnung ist im Vergleich zu vorbekannten Lösungen, die aufgrund der Schwenkbewegung eines Gegengewichts zudem eine grosse Raumhöhe erfordern, komplett über der Kassettenpresse 1 angeordnet (Fig.) und stellt somit keine Gefährdung für den Bediener dar.

### Bezugszeichen

1 Kassettenpresse
2 Wanne
3 Presskopf
4 Pressstempel
5 Endsäule
6 Verteilkopf
7 Portalwagen
8 Verteilrohr
9 Zuführrohr
10 Gelenkstück
11 Gelenkstück
12 Dosierkopf
13 Rohr
14 Rohr
15 Anbindungsgelenk
16 Drehgelenk
17 Anhängevorrichtung
18 Rohr
19 Fachwerkträger
20 Fachwerkträger
21 Gelenkverbindung

## Patentansprüche

1. Vorrichtung zur Käseherstellung, insbesondere eine Kassettenpresse, mit runden oder eckigen Käseformen, zum flüssigkeitsverringernden Pressen von Käserohmasse, aufweisend eine in der Draufsicht offene Wanne (2), einen Presskopf (3) mit einer Vielzahl, auf die Käseformen ausgerichteten Pressstempel (4) zum Pressen der Käserohmasse und einen Verteilkopf (6) zum Einschwemmen der Käserohmasse, der entlang der Längsseiten der Wanne (2) verfahrbar ist, **dadurch gekennzeichnet, dass** am Verteilkopf (6) drehbeweglich eine Gelenkrohranordnung zum Zuführen der Käserohmasse von einem Käsefertiger gekoppelt ist.

2. Vorrichtung nach Anspruch 1, **dadurch gekennzeichnet, dass** die Gelenkrohranordnung ein Doppelgelenk aus zwei winklig zueinander angeordneten und drehgelenkig miteinander verbundenen, rohrförmigen Gelenkstücken (10, 11) umfasst, das mittels einer Gelenkverbindung (21) mit dem Verteilkopf (6) gekoppelt ist.

3. Vorrichtung nach Anspruch 1 oder 2, **dadurch gekennzeichnet, dass** sich an das Doppelgelenk ein etwa senkrecht zur Ebene der Wanne (2) stehendes Rohr (13) drehgelenkig anschliesst.

4. Vorrichtung nach einem der Ansprüche 1 bis 3, **dadurch gekennzeichnet, dass** an das Rohr (13) ein horizontal gelagertes Rohr (14) anschliesst, das wiederum drehgelenkig mit einem weiteren, horizontal gelagerten Rohr (18) verbunden ist.

5. Vorrichtung nach einem der Ansprüche 3 oder 4, **dadurch gekennzeichnet, dass** die Rohre (13, 14, 18) an einer Anhängevorrichtung (17) angehangen sind.

6. Vorrichtung nach Anspruch 5, **dadurch gekennzeichnet, dass** die Anhängevorrichtung (17) und das Rohr (13) auf gegenüberliegenden Längsseiten der Kassettenpresse (1) befindlich angeordnet sind.

7. Gelenkrohranordnung zur Zuführung von Käserohmasse von einem Käsefertiger zu einer Einrichtung zum flüssigkeitsverringernden Pressen der Käserohmasse, **dadurch gekennzeichnet, dass** die Gelenkrohranordnung ein Doppelgelenk aus zwei winklig zueinander angeordneten und drehgelenkig miteinander verbundenen, rohrförmigen Gelenkstücken (10, 11) umfasst, das mittels einer Gelenkverbindung (21) mit einem Verteilkopf (6) der Einrichtung zum Pressen der Käserohmasse koppelbar ist.

8. Gelenkrohranordnung nach Anspruch 7, **dadurch gekennzeichnet, dass** sich an das Doppelgelenk ein etwa senkrecht stehendes Rohr (13) drehgelenkig anschliesst, an das ein horizontal gelagertes Rohr (14) anschliesst, das wiederum drehgelenkig mit einem weiteren, horizontal gelagerten Rohr (18) verbunden ist.

## Claims

1. An apparatus for cheese production, in particular a compartmented press, having round or polygonal cheese moulds, for the liquid-reducing pressing of raw cheese mass, having a trough (2) which is open in plan view, a press head (3) having a plurality of press stamps (4) oriented towards the cheese moulds for pressing the raw cheese mass, and a distribution head (6) for flotation of the raw cheese mass, the distribution head being movable along the long sides of the trough (2), **characterised in that** an articulated tube assembly is coupled rotatably to the distribution head (6) in order to supply the raw cheese mass from a cheese-making machine.

2. The apparatus according to Claim 1, **characterised in that** the articulated tube assembly comprises a double joint consisting of two tubular joint pieces (10, 11) which are arranged at an angle to one another and are connected to one another in a rotationally articulated manner, said double joint being coupled to the distribution head (6) by means of an articulated connection (21).

3. The apparatus according to Claim 1 or 2, **characterised in that** a tube (13) which is approximately perpendicular to the plane of the trough (2) adjoins the double joint in a rotationally articulated manner.

4. The apparatus according to any one of Claims 1 to 3, **characterised in that** the tube (13) is adjoined by a horizontally mounted tube (14), which is in turn connected to a further horizontally mounted tube (18) in a rotationally articulated manner.

5. The apparatus according to one of Claims 3 or 4, **characterised in that** the tubes (13, 14, 18) are suspended from a suspension apparatus (17).

6. The apparatus according to Claim 5, **characterised in that** the suspension apparatus (17) and the tube (13) are arranged on opposing long sides of the compartmented press (1).

7. An articulated tube assembly for supplying raw cheese mass from a cheese-making machine to a device for the liquid-reducing pressing of the raw cheese mass, **characterised in that** the articulated tube assembly comprises a double joint consisting of two tubular joint pieces (10, 11) which are arranged at an angle to one another and are connected to one another in a rotationally articulated manner, said double joint being couplable to a distribution head (6) of the device for pressing the raw cheese mass by means of an articulated connection (21).

8. The articulated tube assembly according to Claim 7, **characterised in that** the double joint is adjoined in a rotationally articulated manner by an approximately vertical tube (13), which is adjoined by a horizontally mounted tube (14), which is in turn connected to a further horizontally mounted tube (18) in a rotationally articulated manner.

## Revendications

1. Dispositif pour la production de fromage, notamment une presse à cassettes, avec des moules à fromage ronds et angulaires, pour le pressage réducteur de liquide de caillé, comportant une cuve (2) ouverte vue en élévation, une tête de compression (3) pourvue d'une pluralité de poinçons de pressage (4) orientés vers les moules à fromage, destinés à presser le caillé et une tête distributrice (6) destinée à noyer le caillé, qui est déplaçable le long des faces longitudinales de la cuve (2), **caractérisé en ce que** sur la tête distributrice (6), un ensemble de tubes articulés est accouplé de manière mobile en rotation, pour alimenter le caillé à partir d'une cuve à fromage.

2. Dispositif selon la revendication 1, **caractérisé en ce que** l'ensemble de tubes articulés comprend une double articulation composée de deux pièces articulées (10, 11) tubulaires, placées de manière angulaire l'une par rapport à l'autre et assemblées l'une à l'autre de manière pivotante, qui est accouplée au moyen d'une liaison articulée (21) avec la tête distributrice (6).

3. Dispositif selon la revendication 1 ou 2, **caractérisé en ce qu'**un tube (13) debout approximativement à la perpendiculaire du plan de la cuve (2) se raccorde de manière pivotante sur la double articulation.

4. Dispositif selon l'une quelconque des revendications 1 à 3, **caractérisé en ce que** sur le tube (13) se raccorde un tube (14) monté à l'horizontale, qui pour sa part est assemblé de manière pivotante avec un autre tube (18) monté à l'horizontale.

5. Dispositif selon l'une quelconque des revendications 3 ou 4, **caractérisé en ce que** les tubes (13, 14, 18) sont accrochés sur un dispositif d'accrochage (17).

6. Dispositif selon la revendication 5, **caractérisé en ce que** le dispositif d'accrochage (17) et le tube (13) sont placés de sorte à se trouver sur des faces longitudinales opposées de la presse à cassettes (1).

7. Ensemble de tubes articulés, destiné à alimenter un caillé d'une cuve à fromage vers un système de pressage réducteur de liquide du caillé, **caractérisé en ce que** l'ensemble de tubes articulés comprend une double articulation composée de deux pièces articulées (10, 11) tubulaires, placées de manière angulaire l'une par rapport à l'autre et assemblées l'une à l'autre de manière pivotante, qui au moyen d'une liaison articulée (21) est susceptible d'être accouplée avec une tête distributrice (6) du système de pressage du caillé.

8. Ensemble de tubes articulés selon la revendication 7, **caractérisé en ce que** sur la double articulation se raccorde de manière pivotante un tube (13) debout approximativement à la perpendiculaire, sur lequel se raccorde un tube (14) monté à l'horizontale, qui pour sa part est assemblé de manière pivotante avec un autre tube (18) monté à l'horizontale.
